# EUROPÄISCHE PATENTSCHRIFT

(11) **EP 2 212 394 B1**
(45) Veröffentlichungstag und Bekanntmachung des Hinweises auf die Patenterteilung: **05.12.2012**
(21) Anmeldenummer: 08843137.4
(22) Anmeldetag: 16.10.2008
(51) Int. Cl.: B32B 27/08

(54) **FLUORPOLYMER-SILICON-VERBUNDE UND VERFAHREN ZUR HERSTELLUNG**
FLUOROPOLYMER-SILICON COMPOUNDS AND METHOD FOR PRODUCTION
COMPOSITES À BASE DE FLUOROPOLYMÈRE ET DE SILICIUM ET LEUR PROCÉDÉ DE PRÉPARATION

(30) Priorität: 22.10.2007 DE 102007000553
(43) Veröffentlichungstag der Anmeldung: 04.08.2010
(73) Patentinhaber: Wacker Chemie AG, 81737 München (DE)
(72) Erfinder: SCHÄFER, Oliver, 84489 Burghausen (DE); RANDEL, Peter, 87452 Altusried (DE)
(74) Vertreter: Gössmann, Christoph Tassilo
(86) Internationale Anmeldenummer: PCT/EP2008/063954
(87) Internationale Veröffentlichungsnummer: WO 2009/053304

(56) Entgegenhaltungen:
- EP-A- 1 489 129
- WO-A-03/014194
- US-A1- 2007 148 473

## Beschreibung

Die Erfindung betrifft einen Verbund und ein Verfahren zur Herstellung des Verbundes.

Thermoplastische Fluorpolymere können mit gängigen thermoplastischen Methoden wie z.B. Cast- und Blasextrusion, Spritzguss, Tiefziehen, Blasformen etc. verarbeitet werden. Sie besitzen typischerweise Eigenschaften wie niedrige Gasdurchlässigkeiten, Medienbeständigkeit, geringe Entflammbarkeit, niedrige Oberflächenenergie und niedrige Reibungskoeffizienten. Ihre Einsatzzwecke reichen daher von Architekturfolien über medizinische Geräte bis zu Rohren und Leitungen für u.a. den chemischen Apparatebau. Nachteilig an diesen Fluorpolymeren ist aber ihre geringe Haftung an chemisch unterschiedlichen Stoffen wie z.B. Mineralien wie z.B. Marmor, Metallen wie z.B. Stahl oder Polymeren wie z.B. Polypropylen. Diese mangelnde Haftung kann durch Vorbehandlung wie z.B. Plasmaverfahren oder chemisches Ätzen oder Primern verbessert werden, dies ist jedoch in der Regel mit erhöhten Kosten verbunden.

In der WO 07/079028 werden nun Laminate aus thermoplastischen Fluorelastomeren mit Klebstoffen auf Basis von Silicon-Organocopolymeren und MQ-Harzen beschrieben, die ohne die Vorbehandlung von thermoplastischen Fluorpolymeren auskommen. Nachteilig an diesen Artikeln bzw. Verfahren ist, dass eine Seite des ArtikelSnun permanent klebrig ist, was sich insbesondere bei Film - oder Rollenware wie z.B. damit ausgerüsteten Folien äußerst ungünstig im Abrollverhalten äußert. D.h. die Rolle des mit dem Klebstoff ausgerüsteten Fluorpolymeren lässt sich nur noch äußerst schwer abrollen und auch die Platzierung auf einer zu klebenden Oberfläche ist gerade bei großen Oberflächen wegen des Klebecharakters sehr aufwändig. Zur Vermeidung dieses Verhaltens muss wiederum aufwändig ein weiterer Release-Liner hinzugefügt werden, welcher wiederum zu vermehrten Kosten und auch Abfallmengen führt.

Weiterhin ist die Transparenz der PSA-Schicht aus Silikon-Organo-Copolymer durch Verwendung der MQ-Harze verringert. Es wurde daher nach einer Möglichkeit gesucht, thermoplastische Fluorpolymere einfach mit einer Haftschicht auszurüsten, die die eben genannten Nachteile nicht aufweist.

Überraschenderweise wurde dabei gefunden, dass bei Verzicht auf die in WO 2007/079028 verwendeten MQ-Harze und durch gleichzeitige chemische Modifizierung der Organo-Silicon-Copolymere ein für viele Einsatzzwecke deutlich verbessertes Material erhalten werden kann.

So kann durch Erhöhung des organischen Anteiles, d.h. durch Verringerung der Kettenlänge des Silicondiamines eine verbesserte Haftung zu Fluorpolymeren erhalten werden, ohne hierfür MQ-Harze verwenden zu müssen, was sich bei den erfindungsgemäßen Materialien zusätzlich in verbesserten optischen Eigenschaften wie Transparenz oder Haze auswirkt.

Man erhält so ein thermoplastisches Fluorpolymer, welches mit einer Art Schmelzkleber ausgestattet ist, d.h. die Klebewirkung der Haftschicht ist nur latent vorhanden und wird nur über Hitzeeinwirkung aktiviert. Dies verbessert natürlich den Umgang mit dem nur latent klebrigen Material enorm.

Gegenstand der Erfindung ist daher ein Verbund eines I) thermoplastisch verarbeitbaren Fluorpolymers und eines II) Organopolysiloxan/Polyharnstoff/Polyurethan-Blockcopolymer der allgemeinen Formel (1) 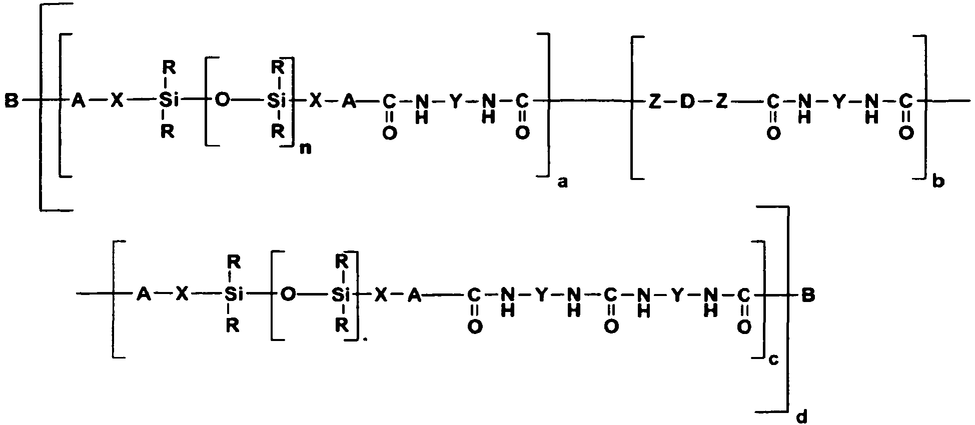 wobei
- **R**: einen einwertigen, gegebenenfalls durch Fluor oder Chlor substituierten Kohlenwasserstoffrest mit 1 bis 20 Kohlenstoffatomen,
- **X**: einen Alkylen-Rest mit 1 bis 20 Kohlenstoffatomen, in dem einander nicht benachbarte Methyleneinheiten durch Gruppen -O- ersetzt sein können,
- **A**: ein Sauerstoffatom oder eine Aminogruppe -NR'-,
- **z**: ein Sauerstoffatom oder eine Aminogruppe -NR'-,
- **R'**: Wasserstoff oder einen Alkylrest mit 1 bis 10 Kohlenstoffatomen,
- **Y**: einen zweiwertigen, gegebenenfalls durch Fluor oder Chlor substituierten Kohlenwasserstoffrest mit 1 bis 20 Kohlenstoffatomen,
- **D**: einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder - OCOO-, ersetzt sein können,
- **B**: Wasserstoff oder einen funktionellen oder nichtfunktionellen organischen oder siliziumorganischen Rest bedeutet,
- **n**: eine Zahl von 1 bis 160,
- **a**: eine Zahl von mindestens 1,
- **b**: eine Zahl von 0 bis 40,
- **c**: eine Zahl von 0 bis 30 und
- **d**: eine Zahl größer 0 bedeuten.

Vorzugsweise bedeutet **R** einen einwertigen,
Kohlenwasserstoffrest mit 1 bis 6 Kohlenstoffatomen, insbesondere nicht substituiert. Besonders bevorzugte Reste **R** sind Methyl, Ethyl, Vinyl und Phenyl.

Vorzugsweise bedeutet **X** einen Alkylen-Rest mit 1 bis 10 Kohlenstoffatomen. Vorzugsweise ist der Alkylen-Rest **X** nicht unterbrochen.

Vorzugsweise bedeutet **A** eine NH-Gruppe.

Vorzugsweise bedeutet **Z** ein Sauerstoffatom oder eine NH-Gruppe.

Vorzugsweise bedeutet **Y** einen Kohlenwasserstoffrest mit 3 bis 14 Kohlenstoffatomen, der vorzugsweise nicht substituiert ist. Vorzugsweise bedeutet **Y** einen Aralkylen-, linearen oder cyclischen Alkylen-Rest. Ganz besonders bevorzugt bedeutet Y einen gesättigten Alkylen-Rest.

Vorzugsweise bedeutet **D** einen Alkylenrest mit mindestens 2, insbesondere mindestens 4 Kohlenstoffatomen und höchstens 12 Kohlenstoffatomen.
Ebenfalls vorzugsweise bedeutet **D** einen Polyoxyalkylenrest, insbesondere Polyoxyethylenrest oder Polyoxypropylenrest mit mindestens 20, insbesondere mindestens 100 Kohlenstoffatomen und höchstens 800, insbesondere höchstens 200 Kohlenstoffatomen.
Vorzugsweise ist der Rest **D** nicht substituiert.

n bedeutet vorzugsweise eine Zahl von mindestens 3, insbesondere mindestens 25 und vorzugsweise höchstens 140, insbesondere höchstens 100, besonders bevorzugt höchstens 60.

Vorzugsweise bedeutet **a** eine Zahl von höchstens 50.

Wenn b ungleich 0, bedeutet **b** vorzugsweise eine Zahl von höchstens 50, insbesondere höchstens 25.

c bedeutet vorzugsweise eine Zahl von höchstens 10, insbesondere höchstens 5.

Vor allem durch den Einsatz von Kettenverlängerer wie Dihydroxyverbindungen oder Wasser zusätzlich zu den Harnstoffgruppen kann eine deutliche Verbesserung der mechanischen Eigenschaften erreicht werden. So können Materialien erhalten werden, die in den mechanischen Eigenschaften mit herkömmlichen Siliconkautschuken durchaus vergleichbar sind, jedoch eine erhöhte Transparenz aufweisen und in die kein zusätzlicher aktiver Füllstoff wie z.B. MQ-Harze eingearbeitet werden müssen, um ausreichende Klebrigkeit zu gewährleisten.

Vorzugsweise weisen die Kettenverlängerer die allgemeine Formel (6)

HZ-D-ZH,

auf, wobei D und Z die vorstehenden Bedeutungen aufweisen. Falls Z die Bedeutung O hat, kann der Kettenverlängerer der allgemeinen Formel (6) auch vor der Umsetzung in einer Vorstufe mit Diisocyanat der allgemeinen Formel (5)

OCN-Y-NCO

umgesetzt werden, wobei
- **Y**: einen zweiwertigen, gegebenenfalls durch Fluor oder Chlor substituierten Kohlenwasserstoffrest mit 1 bis 20 Kohlenstoffatomen bedeutet.

Vorzugsweise sind im Copolymer der allgemeinen Formel (1), bezogen auf die Summe der Urethan- und Harnstoffgruppen, mindestens 50 Mol-%, insbesondere mindestens 75 Mol-% Harnstoffgruppen enthalten.

Beispiele für die zu verwendenden Diisocyanate der allgemeinen Formel (5) sind vorzugsweise aliphatische Verbindungen wie Isophorondiisocyanat, Hexamethylen-1,6-diisocyanat, Tetramethylen-1,4-diisocyanat und Methylendicyclohexyl-4,4`-diisocyanat oder aromatische Verbindungen wie Methylendiphenyl-4,4'-diisocyanat, 2,4-Toluoldiisocyanat, 2,5-Toluoldiisocyanat, 2,6-Toluoldiisocyanat, m-Phenylendiisocyanat, p-Phenylendiisocyanat, m-Xyloldiisocyanat, Tetramethyl-m-xyloldiisocyanat oder Mischungen dieser Isocyanate. Ein Beispiel für kommerziell erhältliche Verbindungen sind die Diisocyanate der DESMODUR®-Reihe (H,I,M,T,W) der Bayer AG, Deutschland. Bevorzugt sind aliphatische Diisocyanate, bei denen **Y** ein gesättigter Alkylenrest ist, da diese zu Materialien führen, die verbesserte UV-Stabilitäten zeigen, was bei einer Außenanwendung der Polymere von Vorteil ist.
Die **a,ω**-OH-terminierten Alkylene der allgemeinen Formel (6) sind bevorzugt Polyalkylene oder Polyoxyalkylene. Diese sind vorzugsweise weitgehend frei von Kontaminationen aus mono-, tri- oder höherfunktionellen Polyoxyalkylenen. Hierbei können vorzugsweise Polyetherpolyole, Polytetramethylendiole, Polyesterpolyole, Polycaprolactondiole aber auch α,ω-OH-terminierte Polyalkylene auf Basis von Polyvinylacetat, Polyvinylacetatethylencopolymere, Polyvinylchloridcopolymer, Polyisobutyldiole eingesetzt werden. Bevorzugt werden dabei Polyoxyalkylene verwendet, besonders bevorzugt Polypropylenglykole. Derartige Verbindungen sind als Basismaterialien unter anderem für Polyurethan-Weichschäume und für Beschichtungsanwendungen kommerziell mit Molekularmassen Mn bis über 10 000 erhältlich. Beispiele hierfür sind die BAYCOLL® Polyetherpolyole und Polyesterpolyole der Bayer AG, Deutschland oder die Acclaim® Polyetherpolyole der Lyondell Inc., USA. Es können auch monomere α,ω-Alkylendiole, wie Ethylenglykol, Propandiol, Butandiol oder Hexandiol eingesetzt werden. Weiterhin sind als Dihydroxyverbindungen im Sinne der Erfindung ebenfalls Bishydroxyalkylsilicone zu verstehen, wie sie z.B. von der Firma Goldschmidt unter dem Namen Tegomer H-Si 2111, 2311 und 2711 vertrieben werden.

Das Polydiorganosiloxan-Harnstoff-Copolymer der allgemeinen Formel (1) zeigt hohe Molekulargewichte und gute mechanische Eigenschaften bei guten Verarbeitungseigenschaften.

Das thermoplastisch verarbeitbare Fluorpolymer besitzt als Unterstruktur eine oder mehrere Einheiten der Struktur -CH₂-CFX', wobei X**'** H, Cl , F oder ein perfluorierter organischer Rest sein kann. Dabei kann die jeweilige Unterstruktur gleichbedeutend mit einer Repetiereinheit des Polymers sein. Die Fluorpolymere können entweder voll fluoriert sein, wie z.B. PFA, MFA oder FEP-Polymere oder teil fluoriert sein wie z.B. bei ETFE-; HTE-; EFEP-, PVDF-, PVF-, ETFE-, ECTFE- oder THV-Polymere. Beispiele für erfindungsgemäße Fluorpolymere sind Polyvinylidenfluoride (Markenname u.a. TEDLAR® von DuPont®, KYNAR® von ARKEMA®), Polyvinylfluoride, Tetrafluorethylen-Ethylen-Copolymere (z.B. ET 6210J, ET 6235, ET 6240 der Fa. DYNEON, Burgkirchen), Hexafluorpropen-Vinylidenfluorid-Copolymere (z.B. DAIEL T-530 von DAIKIN)und andere in WO 2007/079028 erwähnte Produkte.

Besonders bevorzugt sind Tetrafluorethylen-Hexafluorpropylen-Copolymere (FEP) oder auch Ethylen-Tetrafluorethylen-Hexafluorpropylen-Copolymere (EFEP oder HTE) oder Tetrafluorethylen-Ethylen-Copolymere (ETFE).
Der Fluorgehalt des thermoplastischen Fluorpolymers sollte vorzugsweise bei mindestens 15 Gew.% liegen.

Die Dicke des thermoplastisch verarbeitbaren Fluorpolymeren beträgt vorzugsweise zwischen 1 und 2000 µm, besonders bevorzugt zwischen 10 und 500 um und ganz besonders bevorzugt zwischen 25 und 150 µm.

Die Dicke des Organo-Siloxan-Copolymeren beträgt vorzugsweise zwischen 1 und 2000 µm, besonders bevorzugt zwischen 20 und 1000 µm und ganz besonders bevorzugt zwischen 100 und 800 µm. Die Transparenz des Folienverbundes beträgt vorzugsweise größer 80 %, besonders bevorzugt größer 85 % und ganz besonders bevorzugt größer 90 %. (wobei die maximal erreichbare Transparenz bei Messungen aufgrund von Reflexions-Verlusten bei 92 % liegen kann).

Die Schicht aus thermoplastischem Fluorpolymer kann entweder aus einem Polymer, einem Polymerblend verschiedener Fluorpolymere oder auch aus mehreren Schichten verschiedener Fluorpolymere bestehen.

Die Schicht aus Siloxan-Harnstoff-Urethan-Copolymer kann entweder aus einem Polymer, einem Polymerblend verschiedener Siloxan-Harnstoff-Urethan-Copolymere oder auch aus mehreren Schichten verschiedener Siloxan-Harnstoff-Urethan-Copolymere bestehen.

In den erfindungsgemäßen thermoplastischen Materialien können weiterhin vorzugsweise Thermostabilisatoren, UV-Stabilisatoren, Farbstoffe oder HALS -Additive eingearbeitet werden.

Die Herstellung der oben beschriebenen Silicon-Copolymere der allgemeinen Formel (1) kann sowohl in Lösung als auch in Festsubstanz, kontinuierlich oder diskontinuierlich, gemäß DE 10137855 oder EP 250248 erfolgen. Wesentlich dabei ist, dass für die gewählte Polymermischung unter den Reaktionsbedingungen eine optimale und homogene Durchmischung der Bestandteile erfolgt und eine Phasenunverträglichkeit gegebenenfalls durch Lösungsvermittler verhindert wird. Die Herstellung hängt dabei vom verwendeten Lösungsmittel ab. Ist der Anteil der Hartsegmente wie Urethan- oder Harnstoffeinheiten groß, so muss gegebenenfalls ein Lösungsmittel mit einem hohen Löslichkeitsparameter wie beispielsweise Dimethylacetamid gewählt werden. Für die meisten Synthesen hat sich THF als ausreichend gut geeignet erwiesen.

Vorzugsweise werden alle Bestandteile in einem inerten Lösungsmittel gelöst. Besonders bevorzugt ist eine Synthese ohne Lösungsmittel.

Für die Reaktion ohne Lösungsmittel ist die Homogenisierung der Mischung von entscheidender Bedeutung bei der Umsetzung. Ferner kann die Polymerisation auch durch die Wahl der Reaktionsfolge bei einer Stufensynthese gesteuert werden.

Die Herstellung sollte für eine bessere Reproduzierbarkeit generell vorzugsweise unter Ausschluss von Feuchtigkeit und unter Schutzgas, üblicherweise Stickstoff oder Argon erfolgen.

Die Umsetzung erfolgt vorzugsweise ohne Katalysator, kann aber auch, wie bei der Herstellung von Polyurethanen üblich, durch Zugabe eines Katalysators erfolgen. Geeignete Katalysatoren für die Herstellung sind vorzugsweise Dialkylzinnverbindungen, wie beispielsweise Dibutylzinndilaurat, Dibutylzinndiacetat, oder tertiäre Amine wie beispielsweise N,N-Dimethylcyclohexanamin, 2-Dimethylaminoethanol, 4-Dimethylaminopyridin.

Die Herstellung der thermoplastischen Fluorpolymeren kann nach den bekannten Methoden erfolgen.

Ein weiterer Gegenstand ist die Herstellung eines Verbundes, wobei der Verbund durch Coextrusion von I und II in Mehrschichtdüsen durchgeführt wird.

Die Herstellung des Filmverbundes kann entweder durch thermisches Laminieren eines oder mehrerer Filme thermoplastischer Fluorpolymere mit einem oder mehrerer Filme eines erfindungsgemäßen Silicon-Organo-Copolymeren erfolgen oder durch Coextrusion von Schmelzen einer oder mehrerer thermoplastischer Fluorpolymere mit einem oder mehrerer Schmelzen eines erfindungsgemäßen Silicon-Organo-Copolymeren, wobei die Polymerschmelzen entweder durch Aufschmelzen von Polymerpellets erhalten werden oder durch direkte Reaktivextrusion in einem geeigneten Reaktor erhalten werden.

Anschließend werden die Schmelzen der Thermoplaste in einer geeigneten Düse schichtweise vereinigt, und dann nach Austritt aus der Düse abgekühlt und nach Stand der Technik weiterbehandelt (geschnitten, oberflächenstrukturiert etc.).

Bevorzugt wird die Coextrusion von Polymerschmelzen in sog. Feedblock-Düsen oder Mehrschichtdüsen oder eine Kombination beider Düsentypen durchgeführt. Ganz besonders bevorzugt wird die Coextrusion in Mehrschichtdüsen durchgeführt.

Wahlweise kann die Herstellung des erfindungsgemäßen Verbundes auch durch Extrusion eines Silicon-Organo-Copolymeren auf einen bereits vorgefertigten Fluorpolymerfilm erfolgen, wobei die Polymerschmelzen entweder durch Aufschmelzen von Polymerpellets erhalten werden oder durch direkte Reaktivextrusion in einem geeigneten Reaktor erhalten werden. Ebenso kann die Herstellung des Verbundes auch durch Extrusion eines Fluorpolymers auf einen bereits vorgefertigten Silicon-Organo-Copolymerfilm erfolgen.

Ein weiterer Gegenstand ist ein Verbundkörper, der einen erfindungsgemäßen Verbund aufweist.

Der erfindungsgemäße Verbundkörper weist vorzugsweise eine Glasübergangstemperatur (Tg) unter -40 °C und vorzugsweise eine Transparenz größer 80 %, bevorzugt größer 85 % und besonders bevorzugt größer 90 % aufweist.

Aufgrund der hohen Transparenz können die erfindungsgemäßen Verbunde auch als Lichtleitermaterialien wie z.B. Lichtleiterfasern Verwendung finden.

Die erfindungsgemäßen Folienverbünde können als Beschichtungsmaterial für korrosive Metalle (Stahl), im Architekturbereich, zur Abdeckung von Mineralien wie Marmor oder Granit oder aber zur Abdeckung von Solarmodulen Verwendung finden.

Da die erfindungsgemäßen Verbünde relative Permittivitäten von unter 4 As/(Vm), bevorzugt von unter 3 As/(Vm)aufweisen, ist die Verwendung der Laminate in elektrischen oder elektronischen Anwendungen besonders bevorzugt.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen und alle Drücke 0,10 MPa (abs.).Alle Viskositäten wurden bei 20°C bestimmt. Die Molekularmassen wurden mittels GPC in Toluol (0,5 ml/min) bei 23 °C bestimmt(Säule: PLgel Mixed C + PLgel 100 A, Detektor: RI ERC7515)

### Verwendete Materialien:

Isocyanat 1: Methylen-bis-(4-Isocyanatocyclohexan), Desmodur W der Fa. Bayer
Isocyanat 2: Isophorondiisocyanat, Desmodur I der Fa. Bayer
Siliconöl 3: Bisaminoproylterminiertes Polydimethylsiloxan (2900 g/mol) der Fa. Wacker Silicones (FLUID NH 40 D)
Fluorpolymer - Film 4: ET-6235 (200 µm) der Fa. Nowoflon (Ethylen-tetrafluorethylen-copolymer, ETFE) Fluorpolymer- Film 5: EFEP-RP 5000 (200 µm) der Fa. Nowoflon(Ethylen-Hexafluorpropen-Copolymer, EFEP)
Fluorpolymer- Film 6: FEP CT1S (100 µm) der Fa. Norton (Tetrafluorethylen-Hexafluorpropen-Copolymer, FEP)
Fluorpolymer- Film 7: Isoclar 0711 (290 µm) der Fa. Isovolta (Polyvinylidenfluorid, PVF)
Fluorpolymer- Film 8: Isoclar T2754 (100 µm) der Fa. Isovolta (Ethylen-tetrafluorethylen-copolymer, ETFE)

### Beispiel 1:

In einem Zweiwellenkneter der Firma Collin, Ebersberg mit 6 Heizzonen wurde unter Stickstoffatmosphäre in der ersten Heizzone das Diisocyanat und in der zweiten Heizzone das Aminopropylterminierte Siliconöl dosiert. Das Temperaturprofil der Heizzonen war wie folgt programmiert: Zone 1 30°C, Zone 2 140°C, Zone 3 160°C, Zone 4 185°C, Zone 5 185 °C, Zone 6 180 °C. Die Drehzahl betrug 150 u/min. Das Diisocyanat (Methylen-bis-(9-Isocyanatocyclohexan)) wurde in Zone 1 mit 1330 mg/min dosiert und das Aminöl (2900 g/mol) wurde in Zone 2 mit 15 g/min dosiert. An der Düse des Extruders konnte ein Polydimethylsiloxan-Polyharnstoff-Blockcopolymer mit einem Molekulargewicht von 82.000 g/mol und einer MVR -Wert (21.6 kg, 180 °C) von 63 erhalten werden, welches anschließend granuliert wurde.

### Beispiel 2:

In einem Zweiwellenkneter der Firma Collin, Ebersberg mit 6 Heizzonen wurde unter Stickstoffatmosphäre in der ersten Heizzone das Diisocyanat und in der zweiten Heizzone das Aminopropylterminierte Siliconöl dosiert. Das Temperaturprofil der Heizzonen war wie folgt programmiert: Zone 130°C, Zone 2 140°C, Zone 3 160°C, Zone 4 175°C, Zone 5 180°C, Zone 6 170 °C. Die Drehzahl betrug 150 u/min. Das Diisocyanat (Isophorondiisocyanat) wurde in Zone 1 mit 1150 mg/min dosiert und das Aminöl (2900 g/mol) wurde in Zone 2 mit 15 g/min dosiert. An der Düse des Extruders konnte ein Polydimethylsiloxan-Polyharnstoff-Blockcopolymer mit einem Molekulargewicht von 156.000 g/mol und einer MVR -Wert (21.6 kg, 180°C) von 178 erhalten werden, welches anschließend granuliert wurde.

### Beispiele 3 bis 6:

Aus den in Beispiel 1 und 2 hergestellten Granulaten wurden auf einem Folienextruder der Fa. Collin /Ebersberg Folien hergestellt, welche eine Breite von 60 mm hatten und eine Dicke von jeweils ca. 250 µm oder 500 µm.

| | Material | Zone 1 | Zone 2 | Zone 3 | Zone 4 | Folien -Dicke |
|---|---|---|---|---|---|---|
| Beispiel 3 | Beispiel 1 | 150 °C | 180 °C | 200 °C | 195 °C | 489 µm |
| Beispiel 4 | Beispiel 1 | 150 °C | 180 °C | 200 °C | 195 °C | 244 µm |
| Beispiel 5 | Beispiel 2 | 150 °C | 180 °C | 190 °C | 185 °C | 512 µm |
| Beispiel 6 | Beispiel 2 | 150 °C | 180 °C | 190 °C | 185 °C | 230 µm |

### Beispiele 7-20

Die in den Beispielen 3-6 hergestellten Folien der Siloxan-Organo-Copolymere wurden mit verschiedenen thermoplastischen Fluorfolien bei verschiedenen Temperaturen und Drücken laminiert. Anschließend wurde die Haftung mittels eines 180° Schältestes bestimmt.
Fluorpolymer - Film 4: ET-6235 (200 µm) der Fa. Nowoflon (ETFE)
Fluorpolymer- Film 5: EFEP-RP 5000 (200 µm) der Fa. Nowoflon
Fluorpolymer- Film 6: FEP CT1S (100 µm) der Fa. Norton (FEP)
Fluorpolymer- Film 7: Isoclar 0711 (290 µm) der Fa. Isovolta (PVF)
Fluorpolymer- Film 8: Isoclar T2754 (100 µm) der Fa. Isovolta (ETFE)

| Beispiel | Silicon-Film | Fluorpolymer-Film | Temperatur | Druck [MPa] | Laminierdauer | 180 ° Test, N/cm |
|---|---|---|---|---|---|---|
| 7 | Beispiel 3 | Folie 4 | 140 | 1,5 | 15 min | 13,3 |
| 8 | Beispiel 3 | Folie 4 | 150 | 1,5 | 15 min | 18,3 |
| 9 | Beispiel 3 | Folie 4 | 155 | 1,5 | 15 min | 21,5 |
| 10 | Beispiel 3 | Folie 4 | 160 | 1,5 | 15 min | 24,3 |
| 11 | Beispiel 3 | Folie 4 | 155 | 1,0 | 15 min | 20,4 |
| 12 | Beispiel 3 | Folie 4 | 155 | 0, 5 | 15 min | 17,3 |
| 13 | Beispiel 3 | Folie 4 | 155 | 0, 5 | 10 min | 16,2 |
| 14 | Beispiel 3 | Folie 5 | 155 | 1,5 | 10 min | 19,6 |
| 15 | Beispiel 3 | Folie 6 | 155 | 1,5 | 15 min | 18,4 |
| 16 | Beispiel 3 | Folie 7 | 155 | 1,5 | 15 min | 23,3 |
| 17 | Beispiel 3 | Folie 8 | 155 | 1, 5 | 15 min | 31,8 |
| 18 | Beispiel 4 | Folie 4 | 155 | 0, 5 | 10 min | Kohäs ionsb ruch (∼ 17 N/cm) |
| 19 | Beispiel 5 | Folie 4 | 155 | 1,5 | 15 min | 23,4 |
| 20 | Beispiel 6 | Folie 4 | 155 | 0,5 | 10 min | Kohäs ionsb ruch (∼ 17 N/cm) |

### Beispiel 21:

Auf einer Flachfoliencoextrusionsanlage der Fa. Dr. Collin /Ebersberg wurden ein ETFE EP 7000 der Fa. Daikin und das Polymergranulat aus Beispiel 1 auf getrennten Einschneckenextrudern aufgeschmolzen und mittels einer Mehrschichtdüse zu einem Coextrudat vereinigt, abgekühlt und aufgerollt. Die Schichtdicke des Fluorpolymeren betrug dabei 93 µm und die Schichtdicke des Silicon-Organo-Copolymeren aus Beispiel 1 betrug 323 µm.
Die 180 °-Peel-Haftung der Silikonschicht am Fluorpolymeren betrug dabei 14,3 N/cm.

### Beispiel 22:

An verschiedenen Folienlaminaten wurde die Dielektrizitätskonstante und die Transparenz bestimmt

| Beispiel | Laminat | rel. Permittivität (23 °C, 20 kHz)[AS/Vm] | Transparenz [Transmission von 400 - 800 nm in %] |
|---|---|---|---|
| 22 | Beispiel 10 | 2,6 | 91, 5 |
| 23 | Beispiel 14 | 2,6 | 91, 6 |
| 24 | Beispiel 15 | 2,6 | 91,3 |
| 25 | Beispiel 16 | 2,7 | 0 |
| 26 | Beispiel 17 | 2,6 | 89,3 |
| 27 | Beispiel 19 | 2,6 | 91, 7 |

## Patentansprüche

1. Verbund eines
I) thermoplastisch verarbeitbaren Fluorpolymers und eines
II) Organopolysiloxan/Polyharnstoff/Polyurethan-Blockcopolymer der allgemeinen Formel (1) 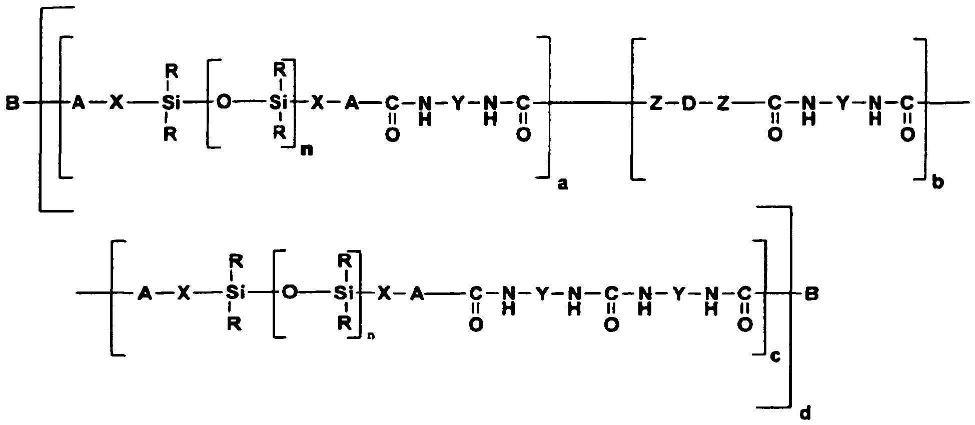 wobei
**R** einen einwertigen, gegebenenfalls durch Fluor oder Chlor substituierten Kohlenwasserstoffrest mit 1 bis 20 Kohlenstoffatomen,
**x** einen Alkylen-Rest mit 1 bis 20 Kohlenstoffatomen, in dem einander nicht benachbarte Methyleneinheiten durch Gruppen -O- ersetzt sein können,
**A** ein Sauerstoffatom oder eine Aminogruppe -NR'-,
**Z** ein Sauerstoffatom oder eine Aminogruppe -NR'-,
**R'** Wasserstoff oder einen Alkylrest mit 1 bis 10 Kohlenstoffatomen,
**Y** einen zweiwertigen, gegebenenfalls durch Fluor oder Chlor substituierten Kohlenwasserstoffrest mit 1 bis 20 Kohlenstoffatomen,
D einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder - OCOO-, ersetzt sein können,
B Wasserstoff oder einen funktionellen oder nichtfunktionellen organischen oder siliziumorganischen Rest bedeutet,
n eine Zahl von 1 bis 160,
a eine Zahl von mindestens 1,
b eine Zahl von 0 bis 40,
c eine Zahl von 0 bis 30 und
d eine Zahl größer 0 bedeuten; mit der Maßgabe, dass kein klebrigmachendes MQ Harz vorhanden ist.

2. Verbund nach Anspruch 1, **dadurch gekennzeichnet, dass** das Polydiorganosiloxan-Harnstoff-Copolymer der allgemeinen Formel (1) Kettenverlängerer, die ausgewählt werden aus Diaminen, Isocyanat-geblockten Hydroxy-Verbindungen, DihydroxyVerbindungen oder Mischungen davon, aufweist.

3. Verfahren zur herstellung eines Verbundes nach Anspruch 1 oder 2 **dadurch gekennzeichnet, dass** der Verbund durch Coextrusion von I und II in Mehrschichtdüsen durchgeführt wird.

4. Verbundkörper, **dadurch gekennzeichnet, dass** er einen Verbund nach einem oder mehreren der Ansprüche 1 bis 3 aufweist.

5. Verbundkörper nach Anspruch 4 , **dadurch gekennzeichnet, dass** die Glasübergangstemperatur (Tg) unter -40 ºC liegt und die Transparenz größer 80 % ist.

6. Verbundkörper nach Anspruch 4 oder 5 , **dadurch gekennzeichnet, dass** die relative Permittivität kleiner als 4 AS/ (Vm) ist.

7. Lichtleiter, **dadurch gekennzeichnet, dass** er einen Verbund nach einem oder mehreren der Ansprüche 1 bis 3 aufweist.

## Claims

1. Composite of a
I) thermoplastically processable fluoropolymer and an
II) organopolysiloxane/polyurea/polyurethane block copolymer of the general formula (1) 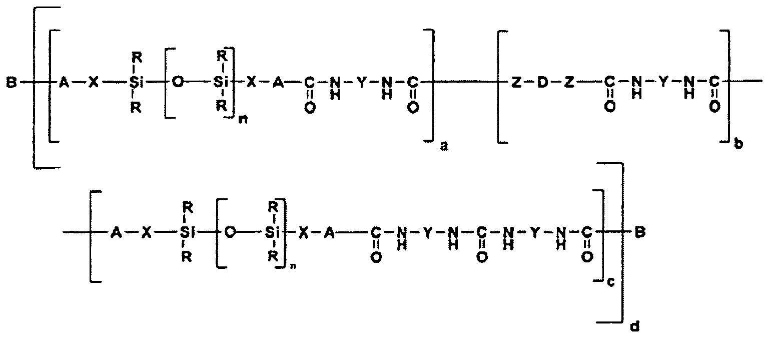 where
**R** is a monovalent, optionally fluorine- or chlorine-substituted hydrocarbon radical having 1 to 20 carbon atoms,
**X** is an alkylene radical having 1 to 20 carbon atoms, in which nonadjacent methylene units may be replaced by -O- groups,
**A** is an oxygen atom or an amino group -NR'-,
**Z** is an oxygen atom or an amino group -NR'-,
**R'** is hydrogen or an alkyl radical having 1 to 10 carbon atoms,
**Y** is a divalent, optionally fluorine- or chlorine-substituted hydrocarbon radical having 1 to 20 carbon atoms,
**D** is an optionally fluorine-, chlorine-, C₁-C₆-alkyl- or C₁-C₆-alkyl ester-substituted alkylene radical having 1 to 700 carbon atoms, in which nonadjacent methylene units may be replaced by -O-, -COO-, -OCO- or -OCOO-groups,
**B** is hydrogen or a functional or nonfunctional organic or organosilicon radical,
**n** is from 1 to 160,
**a** is at least 1,
**b** is from 0 to 40,
**c** is from 0 to 30 and
**d** is greater than 0, with the proviso that no tackifying MQ resin is present.

2. Composite according to Claim 1, **characterized in that** the polydiorganosiloxane-urea copolymer of the general formula (1) contains chain extenders which are selected from diamines, isocyanate-blocked hydroxyl compounds, dihydroxyl compounds or mixtures thereof.

3. Process for producing a composite according to Claim 1 or 2, **characterized in that** the composite is performed by coextrusion of I and II in coextrusion dies.

4. Composite body, **characterized in that** it comprises a composite according to one or more of Claims 1 to 3.

5. Composite body according to Claim 4, **characterized in that** the glass transition temperature (Tg) is less than -40°C and the transparency is greater than 80%.

6. Composite body according to Claim 4 or 5, **characterized in that** the relative permittivity is less than 4 AS/(Vm).

7. Light guide, **characterized in that** it comprises a composite according to one or more of Claims 1 to 3.

## Revendications

1. Composite d'un
I) fluoropolymère façonnable thermoplastiquement et d'un
II) copolymère séquencé d'organopolysiloxane/polyurée/polyuréthane de formule générale (1) 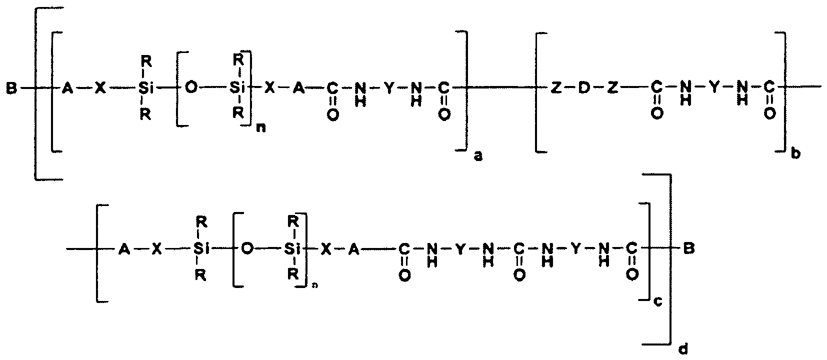 dans laquelle R signifie un radical hydrocarboné monovalent, éventuellement substitué par fluor ou chlore, de 1 à 20 atomes de carbone,
X signifie un radical alkylène de 1 à 20 atomes de carbone, dans lequel des unités méthylène non voisines les unes des autres peuvent être remplacées par des groupes -O-,
A signifie un atome d'oxygène ou un groupe amino -NR'-,
Z signifie un atome d'oxygène ou un groupe amino -NR'-,
R' signifie l'hydrogène ou un radical alkyle de 1 à 10 atomes de carbone,
Y signifie un radical hydrocarboné bivalent, éventuellement substitué par fluor ou chlore, de 1 à 20 atomes de carbone,
D signifie un radical alkylène éventuellement substitué par fluor, chlore, alkyle en C₁-C₆ ou ester alkylique en C₁-C₆, de 1 à 700 atomes de carbone, dans lequel des unités méthylène non voisines les unes des autres peuvent être remplacées par des groupes -O-, -COO-, -OCO- ou -OCOO-,
B signifie l'hydrogène ou un radical organique ou de silicium organique fonctionnel ou non fonctionnel,
n signifie un nombre de 1 à 160,
a signifie un nombre d'au moins 1,
b signifie un nombre de 0 à 40,
c signifie un nombre de 0 à 30, et
d signifie un nombre supérieur à 0, à condition qu'aucune résine MQ collante ne soit présente.

2. Composite selon la revendication 1, **caractérisé en ce que** le copolymère polydiorganosiloxane-urée de formule générale (1) comprend des allongeurs de chaînes, qui sont choisis parmi les diamines, les composés hydroxy bloqués par des isocyanates, les composés dihydroxy ou leurs mélanges.

3. Procédé de fabrication d'un composite selon la revendication 1 ou 2, **caractérisé en ce que** le composite est réalisé par coextrusion de I et II dans des buses multicouches.

4. Corps composite, **caractérisé en ce qu'**il comprend un composite selon une ou plusieurs des revendications 1 à 3.

5. Corps composite selon la revendication 4, **caractérisé en ce que** la température de transition vitreuse (Tg) est inférieure à -40 °C et la transparence est supérieure à 80 %.

6. Corps composite selon la revendication 4 ou 5, **caractérisé en ce que** la permittivité relative est inférieure à 4 AS/(Vm).

7. Fibre optique, **caractérisée en ce qu'**elle comprend un composite selon une ou plusieurs des revendications 1 à 3.
